# EUROPÄISCHE PATENTSCHRIFT

(11) **EP 2 855 561 B1**
(45) Veröffentlichungstag und Bekanntmachung des Hinweises auf die Patenterteilung: **18.05.2016**
(21) Anmeldenummer: 13725662.4
(22) Anmeldetag: 28.05.2013
(51) Int. Cl.: C08G 75/23

(54) **VERFAHREN ZUR HERSTELLUNG VON HOCHLEISTUNGSTHERMOPLASTEN MIT VERBESSERTER EIGENFARBE**
METHOD FOR PRODUCING HIGH-PERFORMANCE THERMOPLASTICS WITH AN IMPROVED NATURAL COLOUR
PROCÉDÉ POUR PRODUIRE DES THERMOPLASTIQUES HAUTEMENT PERFORMANTS PRÉSENTANT UNE COULEUR INTRINSÈQUE AMÉLIORÉE

(30) Priorität: 29.05.2012 EP 12169766
(43) Veröffentlichungstag der Anmeldung: 08.04.2015
(73) Patentinhaber: BASF SE, 67056 Ludwigshafen am Rhein (DE)
(72) Erfinder: WEBER, Martin, 67487 Maikammer (DE); PINKOS, Rolf, 67098 Bad Dürkheim (DE); VOGLER, Thomas, 67071 Ludwigshafen (DE)
(74) Vertreter: BASF IP Association
(86) Internationale Anmeldenummer: PCT/EP2013/060958
(87) Internationale Veröffentlichungsnummer: WO 2013/178628

(56) Entgegenhaltungen:
- EP-A1- 0 362 603
- DE-A1- 10 221 177
- DE-A1- 19 501 063

## Beschreibung

Die vorliegende Erfindung betrifft ein Verfahren zur Aufarbeitung von Polymerlösungen umfassend *N*-Methyl-2-pyrrolidon und ein Polymer wobei die Polymerlösung in Gegenwart eines hydrieraktiven Katalysators mit Wasserstoff hydriert wird.

Die vorliegende Erfindung betrifft auch das Produkt erhältlich aus diesem Verfahren und dessen Verwendung zur Herstellung von insbesondere Polyarylenether Produkten.

Die vorliegende Erfindung betrifft ebenso ein Verfahren zur Herstellung eines Polyarylenethers dadurch gekennzeichnet, dass
(A) eine Polymerisationsreaktion zu Herstellung des Polyarylenethers durchgeführt wird
(B) anorganische Bestandteile der Lösung entfernt werden
(C) die Lösung gemäß dem erfindungsgemäßen Verfahren aufgearbeitet wird
(D) aus der Lösung durch Vereinzelung in ein Fällbad Polyarylenetherperlen hergestellt werden
(E) die Polyarylenetherperlen extrahiert und getrocknet werden.

Die vorliegende Erfindung betrifft auch das Produkt erhältlich aus diesem Verfahren.

Polyarylenether wie Polyarylenethersulfone und Polyarylenetherketone gehören wie dem Fachmann bekannt zur Gruppe der Hochleistungsthermoplaste und zeichnen sich durch hohe Wärmeformbeständigkeit, gute mechanische Eigenschaften und inhärente Flammwidrigkeit aus.

Polyarylenether wie Polyarylenethersulfone und Polyarylenetherketone werden oftmals in N-Methyl-2-pyrrolidon-haltigen Lösungsmitteln hergestellt. N-Methyl-2-pyrrolidon (NMP) ist ein bevorzugtes Lösungsmittel, da es auf Grund seines Lösungsvermögens einen sehr hohen Polymergehalt in der Polymerlösung zulässt.

DE 195 01 063 offenbart ein Verfahren zur Aufarbeitung von Polyarylenethern. Die Herstellung der Polyarylenether erfolgt dabei beispielsweise in N-Methylpyrrolidon in Gegenwart von Kaliumcarbonat. Zur Aufarbeitung werden aus dem Reaktionsgemisch die während der Reaktion entstandenen Alkalimetallhalogenide, beispielsweise durch Filtration, entfernt. Die weitere Aufarbeitung erfolgt durch Ausfällen der Polyarylenether durch Zugabe einer wässrigen Base. Durch das Verfahren gemäß DE 195 01 063 werden Polyarylenether mit guten Eigenschaften erhalten. Die Polyarylenether gemäß DE 195 01 063 sind im Hinblick auf ihre Eigenfarbe jedoch noch verbesserungsfähig.

DE 102 21 177 beschreibt ebenfalls ein Verfahren zur Aufarbeitung von Polyarylenethern. Hierzu wird die Polyarylenetherlösung mit einem Adsorptionsmittel in Kontakt gebracht. Auch bei dem Verfahren gemäß DE 102 21 177 werden Polyarylenether erhalten, die im Hinblick auf ihre Eigenfarbe noch verbesserungsfähig sind.

Es stellte sich die Aufgabe, ein Verfahren zur Herstellung von Polymeren insbesondere Polyarylenethern zur Verfügung zu stellen, bei dem die resultierenden Produkte eine verbesserte Eigenfarbe, einen erhöhten löslichen Anteil und einen verbesserten Wert der Schmelzestabilität aufwiesen.

Allgemeine Hinweise zur Herstellung der Polyarylether finden sich u.a. bei R.N. Johnson et.al., J.Polym. Sci. A-1 5 (1967) 2375, J.E. McGrath et.al., Polymer 25 (1984) 1827).

Verfahren zur Herstellung von Polyarylenethersulfonen aus aromatischen Bishalogenverbindungen und aromatischen Bisphenolen oder deren Salzen in Gegenwart mindestens eines Alkalimetall- oder Ammoniumcarbonats oderhydrogencarbonats in einem aprotischen Lösungsmittel sind dem Fachmann bekannt und werden beispielsweise in US 4 870 153 , EP 113 112, EP-A 297 363 und EP-A 135 130, auf die an dieser Stelle ausdrücklich Bezug genommen wird, ausführlich beschrieben. Insbesondere können diesen Schriften beispielsweise geeignete Edukte, Katalysatoren und Lösungsmittel, geeignete Mengenverhältnisse der beteiligten Stoffe und geeignete Reaktionszeiten und -parameter wie Reaktionstemperaturen oderdrucke sowie geeignete Aufarbeitungsmethoden entnommen werden.
Die Herstellung von Hochleistungsthermoplasten wie Polyarylethern erfolgt durch Polykondensationsreaktionen, die üblicherweise bei hoher Reaktionstemperatur in dipolar aprotischen Lösungsmitteln, wie beispielweise DMF, DMAc, Sulfolan, DMSO und NMP durchgeführt werden.

Besonders bevorzugt ist NMP als Lösungsmittel, da aufgrund des hohen Lösungsvermögens von NMP Reaktionen auch bei sehr hohem Polymergehalt durchgeführt werden können. Nachteilig ist jedoch die Verfärbung des Lösungsmittels während der Kondensationsreaktion, die zu einer bleibenden Verfärbung des Polymeren führt.

Aufgabe der vorliegenden Patentanmeldung war daher, ein Verfahren zur Herstellung der Hochleistungsthermoplaste Polyarylether und Polyetherimide mit verbesserter Eigenfarbe zur Verfügung zu stellen. Gleichzeitig sollte das Verfahren so ausgearbeitet werden, dass möglichst wenig N-Methylpyrolidon zu Nebenprodukten umgesetzt wird.

Eine weitere Aufgabe der vorliegenden Erfindung ist die Bereitstellung eines Verfahrens zur Herstellung von Polyarylenethern, die eine verbesserte Eigenfarbe aufweisen. Ein Maß für die Eigenfarbe von Polymeren stellt der so genannte Gelbwert (YI). Der Gelbwert lässt sich nach DIN 6167 EN "Description of yellowness of near-white or near-colourless materials", 01.01.1980, bestimmen. Der Gelbwert (YI) stellt somit ein Maß für die Eigenfarbe eines Polymers dar.

Gelöst wird die erfindungsgemäße Aufgabe durch eingangs definierte Verfahren, nämlich ein Verfahren zur Aufarbeitung von Polymerlösungen umfassend N-Methyl-2-pyrrolidon und ein Polymer wobei die Polymerlösung in Gegenwart eines hydrieraktiven Katalysators mit Wasserstoff hydriert wird.

Unter einer Polymerlösung wird eine Lösung verstanden, die ein oder mehrere Lösungsmittel und ein oder mehrere Polymere umfassen kann. Die Polymerlösung kann darüber hinaus Materialien enthalten, die aus dem Herstellungsprozess stammen. Hierzu zählen Verunreinigungen als auch Einsatzstoffe. Insbesondere kann die Polymerlösung auch Monomere sowie Salze aus dem Herstellungsprozess der Polymere wie Natriumcarbonat, Kaliumcarbonat, Kaliumchlorid oder Natriumchlorid umfassen. Auch Nebenprodukte und/oder Zersetzungsprodukte können in der Polymerlösung vorhanden sein.

Die Aufarbeitung erfolgt bevorzugt durch Umsetzung der Polymerlösung mit Wasserstoff in Gegenwart von hydrieraktiven Katalysatoren. Wasserstoff kann in Reinheiten zwischen 95 Vol.-% und 99,99999 Vol.-% eingesetzt werden wobei sich die Vol.-% auf das Gesamtvolumen des zugeführten Wasserstoffs zu Hydrierung bezieht.

Als hydrieraktiver Katalysator kann ein homogen löslicher oder ein heterogener Katalysator verwendet werden.

Der hydrieraktive Katalysator enthält bevorzugt Elemente des Periodensystems ausgewählt aus der Gruppe von Ruthenium, Kobalt, Rhodium, Iridium, Nickel, Palladium, Platin, Kupfer, Silber, Gold, Lanthan, Rhenium oder deren Mischungen. Besonders bevorzugt sind die Elemente ausgewählt aus der Gruppe von Ruthenium, Kobalt, Nickel, Palladium, Kupfer oder deren Mischungen.

Der hydrieraktive Katalysator kann die Elemente in Form ihrer Metalle, in Form unlöslicher Verbindungen wie der Oxide der Elemente, in Form homogen löslicher Metallkomplexe oder deren Mischungen enthalten.

Wird als hydrieraktiver Katalysator ein homogen löslicher Katalysator eingesetzt, so enthält dieser bevorzugt Ruthenium.

Besonders bevorzugt ist der Einsatz eines heterogenen hydrieraktiven Katalysators. Der heterogene hydrieraktive Katalysator kann in Form eines Voll-, Tränk- oder Fällkatalysators eingesetzt werden. Die vorgenannten heterogenen hydrieraktiven Katalysatoren werden sowie deren Herstellung wird beschrieben in Handbook of Heterogeneous Catalysis, Wiley VCH, Weinheim, 2. Auflage 2008, Band 1 - 8, Herausgeber, Gerhard Ertl, Helmut Knözinger, Ferdi Schüth, Jens Weitkamp.

Der Tränk- oder Fällkatalysator umfasst in der Regel ein Träger- und/oder Gerüstmaterial. Das Träger- und/oder Gerüstmaterial kann Kohle wie Aktivkohle, Graphit, Aluminium-, Silizium-, Titan-, Cer- oder Zirkonoxide und deren Mischungen umfassen.

Das hydrieraktive Element kann einen Anteil in Bezug auf das Gesamtgewicht des Katalysators von 0,001 bis 90 Gew.-% haben, wobei die Summe der Gew.-% des hydrieraktiven Elements und des Träger- und/oder Gerüstmaterials 100 Gew.-% ergibt.

Wird als heterogener hydrieraktiver Katalysator ein Tränkkatalysator verwendet, kann der Anteil an hydrieraktivem Element in Bezug auf das Gesamtgewicht des Katalysators von 0,001 bis 20 Gew.-%, bevorzugt von 0,01 bis 10 Gew.-%, insbesondere von 0,1 bis 5 Gew.-% betragen, wobei die Summe der Gew.-% des hydrieraktiven Elements und des Träger- und/oder Gerüstmaterials 100 Gew.-% ergibt.

Bevorzugt ist ein heterogener hydrieraktiver Katalysator umfassend von 10 bis 99,999 Gew.-% Aluminium- und/oder Zinkoxid und von 0,001 bis 90 Gew.-% Kobalt, Nickel, Kupfer, Palladium oder deren Mischungen.

Als Polymer kann ein Polyarylenether eingesetzt werden. Gegenstand der vorliegenden Erfindung ist somit auch ein Verfahren, bei dem als Polymerlösung eine Polyarylenetherlösung eingesetzt wird. Polyarylenether sind dem Fachmann als Polymerklasse bekannt. Im Prinzip kommen alle dem Fachmann bekannten und/oder nach bekannten Methoden herstellbaren Polyarylenether in Betracht. Entsprechende Methoden werden weiter unten erläutert.

Bevorzugte Polyarylenether sind aus Bausteinen der allgemeinen Formel I aufgebaut: 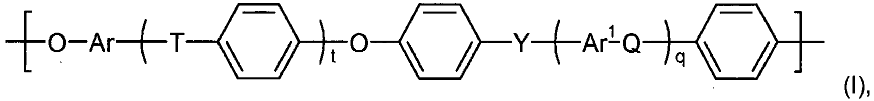 wobei die Symbole t, q, Q, T, Y, Ar und Ar¹ folgende Bedeutungen aufweisen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
- Ar, Ar¹:: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cyclo-alkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylenether sind solche, die mindestens eine der folgenden Bausteine la bis Io als wiederkehrende Struktureinheiten enthalten:

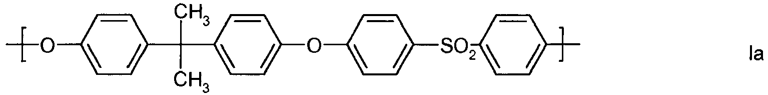

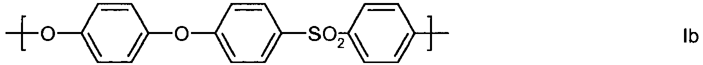

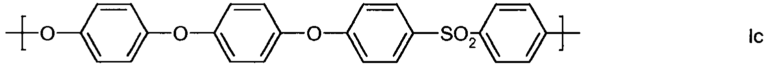

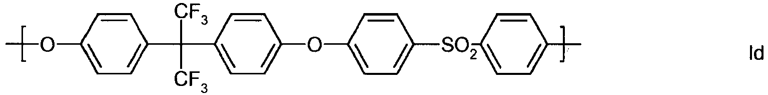

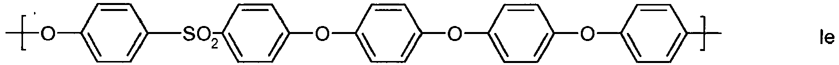

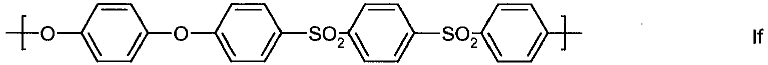

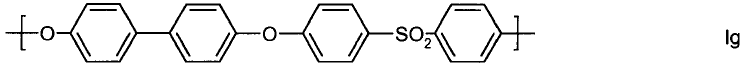

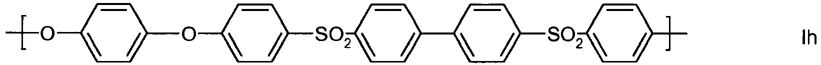

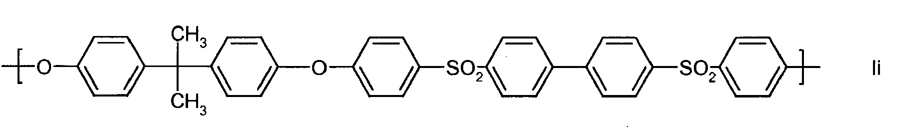

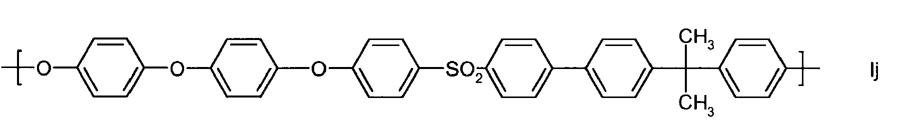

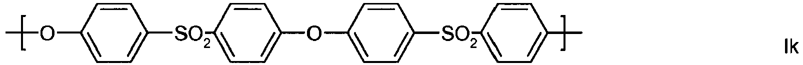

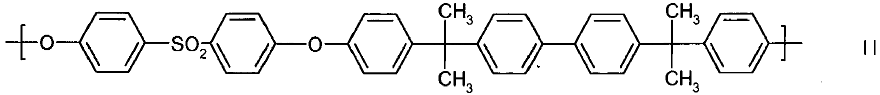

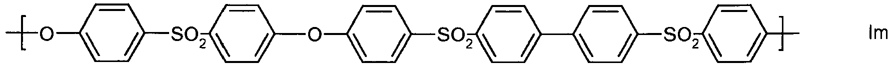

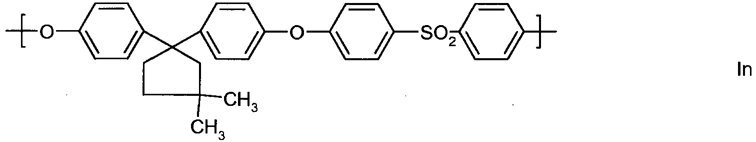

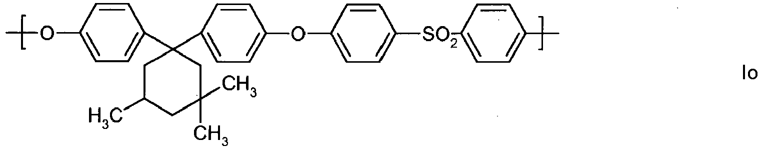

Zusätzlich zu den bevorzugten Bausteinen la bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen- oder durch Naphthyleneinheiten, die von Dihydroxynaphthalin abstammen, ersetzt sind.

Als Bausteine der allgemeinen Formel I besonders bevorzugt sind die Bausteine la, Ig und Ik. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus la, Ig und Ik aufgebaut sind.

In einer besonders bevorzugten Ausführungsform ist Ar = 1,4-Phenylen, t = 1, q = 0, T ist eine chemische Bindung und Y = SO₂. Aus der vorgenannten Wiederholungseinheit aufgebaute besonders bevorzugte Polyarylenethersulfone (A) werden als Polyphenylensulfon (PPSU) bezeichnet (Formel Ig).

In einer weiteren besonders bevorzugten Ausführungsform ist Ar = 1,4-Phenylen, t = 1, q = 0, T = C(CH₃)₂ und Y = SO₂. Aus der vorgenannten Wiederholungseinheit aufgebaute besonders bevorzugte Polyarylenethersulfone (A) werden als Polysulfon (PSU) bezeichnet (Formel la).

In einer weiteren besonders bevorzugten Ausführungsform ist Ar = 1,4-Phenylen, t = 1, q = 0, T = Y = SO₂. Aus der vorgenannten Wiederholungseinheit aufgebaute besonders bevorzugte Polyarylenethersulfone werden als Polyethersulfon (PESU) bezeichnet (Formel Ik).

Abkürzungen wie PPSU, PESU und PSU entsprechen im Rahmen der vorliegenden Erfindung der DIN EN ISO 1043-1 (Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002).

Die Polyarylenether weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteilte Polymethylmethacrylate als Standard.

Herstellungsverfahren, die zu den vorgenannten Polyarylenethern führen, sind dem Fachmann an sich bekannt und beispielsweise in Herman F. Mark, "Encyclopedia of Polymer Science and Technology", third edition, Volume 4, 2003, Kapitel "Polysulfones" auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Vorzugsweise weisen die Polyarylenether entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether sind Halogen, insbesondere Chlor, Alkoxy, insbesondere Methoxy, Aryloxy, insbesondere Phenoxy, oder Benzyloxy.

Das Verfahren zur Aufarbeitung von Polymerlösungen wird möglichst bei Drücken und Temperaturen durchgeführt, bei denen das Lösungsmittel stabil ist. Besonders bevorzugt wird die Aufarbeitung bei Drücken und Temperaturen durchgeführt, bei denen von 0,0001 Gew.-% bis 5 Gew.-% NMP bezogen auf das Gesamtgewicht des eingesetzten NMPs hydriert werden, bevorzugt von 0,0001 Gew.-% bis 2,5 Gew.-% NMP bezogen auf das Gesamtgewicht des eingesetzten NMPs hydriert werden, besonders bevorzugt von 0,0001 Gew.-% bis 1 Gew.-% NMP bezogen auf das Gesamtgewicht des eingesetzten NMPs hydriert werden. Auch werden Druck und Temperatur so gewählt, dass etwaige Aromaten und/oder Sulfongruppen des Polyarylenethers nicht umgesetzt werden
Das Verfahren zur Aufarbeitung von Polymerlösungen kann bei einem Druck von 1 bar bis 320 bar durchgeführt wird.

Das Verfahren zur Aufarbeitung von Polymerlösungen kann bei einer Temperatur von 20 bis 250 °C, bevorzugt von 20 bis 200 °C, besonders bevorzugt von 20 bis 150 °C durchgeführt werden.

Das Verfahren zur Aufarbeitung von Polymerlösungen in Gegenwart eines heterogenen hydrieraktiven Katalysators kann im Festbett oder in Suspension durchgeführt werden. Bevorzugt wird das Verfahren zur Aufarbeitung von Polymerlösungen mit einem Festbettkatalysator in einer Rieselfahr- oder Sumpffahrweise. Das Verfahren kann mit oder bevorzugt ohne Flüssigumlauf durchgeführt werden.

Gegenstand der vorliegenden Erfindung ist somit auch ein Produkt, das nach dem erfindungsgemäßen Verfahren zur Aufarbeitung von Polymerlösungen erhältlich ist. Das Produkt weist dabei bevorzugt einen Gelbwert (yellowness index; YI) im Bereich von 10 bis 79 auf. Der Gelbwert wird gemessen nach DIN 6167 EN. Bevorzugt weisen die Produkte einen Gelbwert im Bereich von 10 bis < 40 auf. Besonders bevorzugt weisen die Produkte einen Gelbwert im Bereich von 10 bis 38 auf.

Der Zulauf der Polymerlösung, der dem Hydrierschritt unterzogen wird, wird zusammen mit Wasserstoff über das Katalysatorbett geleitet. Der Reaktionsaustrag wird zumindest auf das Druckniveau entspannt, das in der nachfolgenden Fällung eingestellt ist.

Die Erfindung betrifft auch ein Verfahren zur Herstellung eines Polyarylenethers dadurch gekennzeichnet, dass
(A) eine Polymerisationsreaktion zu Herstellung des Polyarylenethers durchgeführt wird
(B) anorganische Bestandteile der Lösung entfernt werden
(C) die Lösung gemäß dem erfindungsgemäßen Aufarbeitungsverfahren behandelt wird
(D) aus der Lösung durch Vereinzelung in ein Fällbad Polyarylenetherperlen hergestellt werden
(E) die Polyarylenetherperlen extrahiert und getrocknet werden.

Eine Polymerisationsreaktion (A) zur Herstellung eines Polyarylenethers ist dem Fachmann wie oben beschrieben bekannt. Ebenso sind dem Fachmann Verfahren bekannt zur Abtrennung anorganischer Bestandteil (B). Verfahren zur fest/flüssig Filtration sind beschrieben in "Handbuch der industriellen Fest/Flüssig-Filtration", H. Gasper, D. Oechsle, E. Pongratz, Wiley-VCH, Weinheim, 2000. Die Vereinzelung einer Polymerlösung (D) ist dem Fachmann ebenso zum Beispiel aus der DE 3 644 464 A1 bekannt. Auch die Extraktion und Trocknung von Polymerpartikeln ist dem Fachmann bekannt.
Überraschenderweise führt die erfindungsgemäße Aufarbeitung der Polymerlösung gemäß Schritt (C) zu einer Verbesserung der optischen Eigenschaften und der Schmelzestabilität sowie einer Reduktion des unlöslichen Anteils nach thermischer Belastung bei 400 °C für 1 Stunde jeweils von Formkörpern hergestellt aus den Polyarylenetherperlen, die aus diesem Verfahren zu Verfügung gestellt werden.

Die Erfindung betrifft auch ein Produkt aus dem Verfahren zur Herstellung eines Polyarylenethers gemäß den Schritten (A) bis (E).

Auch betrifft die Erfindung ein Produkt aus dem Verfahren zur Herstellung eines Polyarylenethers gemäß den Schritten (A) bis (E) wobei eine 2 mm dicke Platte (hergestellt durch Spritzguss in einem Werkzeug mit polierter Oberfläche bei 350° C Massetemperatur und 150 °C Werkzeugtemperatur) hergestellt aus Polyarylenetherperlen einen Yellownessindex gemessen nach DIN 6167 von 20 bis 79 hat. Bevorzugt weisen die Produkte einen Gelbwert im Bereich von 10 bis < 40 auf. Besonders bevorzugt weisen die Produkte einen Gelbwert im Bereich von 10 bis 38 auf.

Auch betrifft die Erfindung ein Produkt aus dem Verfahren zur Herstellung eines Polyarylenethers gemäß den Schritten (A) bis (E) wobei das Produkt nach thermischer Belastung von 1 Stunde bei 400°C in einem Kapillarrheometer einen löslichen Anteil von 92 bis 99,5 Gew.-% hat (Messung erfolgt über Intensität des Produkt-Peaks in der GPC-Messung einer Lösung der Konzentration von 4 mg/ml nach Eichung mit reinem PESU).

Die Erfindung betrifft auch ein Produkt aus dem Verfahren zur Aufarbeitung von Polymerlösungen umfassend *N*-Methyl-2-pyrrolidon und ein Polymer wobei die Polymerlösung in Gegenwart eines hydrieraktiven Katalysators mit Wasserstoff hydriert wird.

Die Erfindung betrifft auch die Verwendung einer Lösung aus dem Verfahren zur Aufarbeitung von Polymerlösungen zur Herstellung von Polymerprodukten umfassend *N*-Methyl-2-pyrrolidon und ein Polymer wobei die Polymerlösung in Gegenwart eines hydrieraktiven Katalysators mit Wasserstoff hydriert wird.

Unter Polymerprodukten werden Produkte verstanden, die einer Extraktion, Trocknung und/oder einem formgebenden Verfahren unterzogen wurden. So betrifft die Anmeldung auch Produkte aus dem Verfahren, die nach Aufarbeitung wie Extraktion und Trocknung in eine verkaufsfähige Form gebracht werden wie Pellets, Pulver, Granulate, Chips, Körner oder Fäden.

### Beispiele

Die Viskositätszahl der Polyarylenether wurde in 1 %-iger Lösung von N-Methyl-pyrrolidon bei 25°C gemäß DIN EN ISO 1628-1 bestimmt.

Die Messung des Gelbwerts (YI) erfolgte nach DIN 6167 EN "Description of yellowness of near-white or near-colourless materials", 01.01.1980.

Der Transparenz-Wert und der Haze-Wert wurde nach ASTM D 1003 EN "Standard Test Method for Haze and Luminous Transmittance of Transparent Plastics", 01.01.2011 bestimmt.

Die Isolierung der Polyarylenethersulfon Polymerlösung erfolgte durch Vereinzelung der Polymerlösung über eine Kapillare in VE-Wasser bei 25 °C (Fallhöhe 0,5 m, Durchsatz ca. 2,5 L/h). Die erhaltenen Polyarylenethersulfon Perlen wurden anschließend bei 85 °C für 20 h mit Wasser extrahiert (Wasserdurchsatz 160 L/h). Danach wurden die Perlen bei 150 °C im Vakuum (< 100 mbar) auf eine Restfeuchte von weniger als 0,1 Gew.-% getrocknet. Die getrockneten Polyarylenethersulfon Perlen wurden auf einem Zweiwellenextruder (PTW 16 Thermo Scientific) bei einer Schmelzetemperatur von 350 °C und einem Durchsatz von 2,5 kg/h zu Granlulat extrudiert.
Das Granulat wurde mittels Spritzguss bei 350 °C Schmelzetemperatur und 150 °C Werkzeugtemperatur zu 2 mm dicken Platten für optische Messungen verarbeitet.

Die Schmelzestabilität der Produkte wurde durch Messungen im Kapillarrheometer ermittelt. Zur Probenvorbereitung wurde das Material 3 Tage bei 125°C im Vakuum (<100 mbar) getrocknet. Danach wurde in einem Rosand Kapillar Viskosimeter die Schmelze bei 400°C durch eine Kapillare mit Vollkreisquerschnitt 0,5 mm und Länge 16 mm gepresst. Der Volumendurchsatz wurde vorgegeben und der Prüfdruck gemessen. Aus dem Prüfdruck wurde die scheinbare Viskosität bei 400°C bei einer Scherrate von 1000 s⁻¹ als Funktion der Verweilzeit ermittelt. Es wurde der Quotient (Q) zwischen dem nach 60 Minuten gemessenen Wert und dem Ausgangswert (nach 5 Minuten) bestimmt.

Außerdem wurde mittels GPC (25°C, DMAc als Lösungsmittel, PMMA-Proben als Standard mit einem Verhältnis von Mw/Mn kleiner 1,2) das Molekulargewicht und der lösliche Anteil der nach 60 Minuten bei 400°C extrudierten Stränge bestimmt.

Gaschromatographie wurde an einem HP6890 durchgeführt (FID-Detektor, Stickstoff Trägergas mit 1,0 mL/min (const. flow); Split Ratio 1:50; Säule RTX-1, 30 m, 0,32 mm, 1,0 µm Film; Temperaturprogramm Start bei 80 °C, dann 5 °C/min bis 140 °C, dann 5 °C/min bis 200 °C und 10 min isotherm, dann 10 °C/min bis 340 °C und 8 min isotherm)

### Herstellung der Polymerlösung:

In einen 4 L-Reaktor mit Innenthermometer, Gaseinleitungsrohr, Rückflusskühler mit Wasserabscheider wurden 574,16 g Dichlordiphenylsulfon (DCDPS), 500,34 g Dihydroxydiphenylsulfon (DHDPS) und 290,24 g Kaliumcarbonat unter Stickstoffatmosphäre in 1053 ml NMP suspendiert. Innerhalb 1 h wird der Ansatz auf 190°C erhitzt. Als Reaktionsdauer wurde die Verweilzeit bei 190°C betrachtet. Das Reaktionswasser wurde abdestilliert und der Füllstand durch Zufügen von NMP während der Reaktion konstant gehalten. Nach 3,5 h Reaktionszeit wurde die Reaktion durch Verdünnung mit kaltem NMP (1947 ml) abgebrochen, anschließend wird bei 140°C für 45 Minuten Methylchlorid (10l/h) in den Ansatz eingeleitet (45 Minuten). Danach wurde Stickstoff eingeleitet (20 l/h) und der Ansatz abgekühlt. Das entstandene Kaliumchlorid wurde abfiltriert.

Durch Zugabe von 1,5 l NMP wurde die Polymerlösung auf eine Konzentration von 928 g Polymer/4,5 I NMP weiterverdünnt.

### Hydrierversuche (Beispiele 2 und 3):

Die Hydrierung wurde in einer kontinuierlichen Anlage mit einem isotherm betriebenen Rohrreaktor (Länge 1,8 m, Innendurchmesser 1,0 cm) im geraden Durchgang und einem Cu/La-Oxid/Al-Oxid-Katalysator, hergestellt nach WO 2006/005505, Beispiel 3 (Katalysatoraktivierung in der Anlage: 70 h bei 180 °C, 50 NL/h N₂, 4 NL/h H₂; dann 7 h bei 180 °C, 4 NL/h H₂, 190 mL, 190 mL (NL = Normliter, also Gasvolumen unter Standardbedingungen) durchgeführt. Dabei wurden sowohl der Zulauf als auch die Leitungen auf 90 - 100 °C begleitbeheizt, um die Polymerlösung in NMP fließfähig zu halten. Alle Versuche wurden bei einer Belastung von 1,1 kg_{Polymerlösung}/L_{Kat}/h durchgeführt und die erhaltenen Polymerlösungen wurden anschließend, wie bereits beschrieben, gefällt und aufgearbeitet. Die Zuläufe und Austräge für die Hydrierversuche wurden stets mit Argon überlagert.

Der NMP-Umsatz zu N-Methylpyrrolidin lag in allen Fällen unter 2,5 GC-FI.%.

Für Vergleichsbeispiel V1 wurde die Polymerlösung ohne vorherige Hydrierung direkt gefällt und aufgearbeitet.

### V4: Vergleichsbeispiel gemäß DE 195 01 063, das heißt Aufarbeitung durch Zugabe wässriger Basen

### Herstellung der Polymerlösung:

In einen 4 L-Reaktor mit Innenthermometer, Gaseinleitungsrohr, Rückflusskühler mit Wasserabscheider wurden 574,16 g Dichlordiphenylsulfon (DCDPS), 500,34 g Dihydroxydiphenylsulfon (DHDPS) und 290,24 g Kaliumcarbonat unter Stickstoffatmosphäre in 1053 ml N-Methylpyrrolidon (NMP) suspendiert. Innerhalb 1 h wurde der Ansatz auf 190°C erhitzt. Als Reaktionsdauer wurde die Verweilzeit bei 190°C betrachtet. Das Reaktionswasser wurde abdestilliert und der Füllstand durch Zufügen von NMP während der Reaktion konstant gehalten. Nach 3,5 h Reaktionszeit wurde die Reaktion durch Verdünnung mit kaltem NMP (1947 ml) abgebrochen, anschließend wurde bei 140°C für 45 Minuten Methylchlorid (10l/h) in den Ansatz eingeleitet (45 Minuten). Danach wurde Stickstoff eingeleitet (20 l/h) und der Ansatz abgekühlt. Das entstandene Kaliumchlorid wurde abfiltriert.

Durch Zugabe von 1,5 l NMP wurde die Polymerlösung auf eine Konzentration von 928 g Polymer/4,5 I NMP weiterverdünnt. Diese Lösung wurde, wie in DE 195 01 063 beschrieben, in wässriger Kaliumcarbonatlösung (pH 11) gefällt, das Filtrat 4 mal mit jeweils 1 L wäßriger Kaliumcarbonatlösung (pH 11) gewaschen und anschließend getrocknet auf eine Restfeuchte < 0,1 % getrocknet. Die Weiterverarbeitung erfolgte wie vorstehend beschrieben.

### V5: Vergleichsbeispiel gemäß DE 102 21 177, das heißt Aufarbeitung durch Adsorbtionsmittel

In einen 4 L-Reaktor mit Innenthermometer, Gaseinleitungsrohr, Rückflusskühler mit Wasserabscheider wurden 574,16 g Dichlordiphenylsulfon (DCDPS), 500,34 g Dihydroxydiphenylsulfon (DHDPS) und 290,24 g Kaliumcarbonat unter Stickstoffatmosphäre in 1053 ml NMP suspendiert. Innerhalb 1 h wurde der Ansatz auf 190°C erhitzt. Als Reaktionsdauer wurde die Verweilzeit bei 190°C betrachtet. Das Reaktionswasser wurde abdestilliert und der Füllstand durch Zufügen von NMP während der Reaktion konstant gehalten. Nach 3,5 h Reaktionszeit wurde die Reaktion durch Verdünnung mit kaltem NMP (1947 ml) abgebrochen, anschließend wurde bei 140°C für 45 Minuten Methylchlorid (10l/h) in den Ansatz eingeleitet (45 Minuten). Danach wurde Stickstoff eingeleitet (20 l/h) und der Ansatz abgekühlt. Das entstandene Kaliumchlorid wurde abfiltriert.

Durch Zugabe von 1,5 I NMP wurde die Polymerlösung auf eine Konzentration von 928 g Polymer/4,5 I NMP weiterverdünnt. Diese Lösung wurde, wie in DE 102 21 177 beschrieben, auf 100°C erwärmt und mit 100 g Kieselgel 70-230 mesh, Oberfläche nach BET 500 m²/g versetzt und 30 Minuten gerührt. Anschließend wurde das Kieselgel abfiltriert und das Polymere wie vorstehend beschrieben isoliert und verarbeitet.

**Tabelle 1:**

| | V1 | 2 | 3 | V4 | V5 |
|---|---|---|---|---|---|
| | | | | | |
| Wasserstoffdruck für Hydrierung [bar] | - | 40 | 20 | - | - |
| Hydriertemperatur [°C] | - | 100 | 115 | - | - |
| V.N. [ml/g] | 43,5 | 45,2 | 45,4 | 44,5 | 45,1 |
| Transmission [%] | 81,3 | 77,8 | 83,9 | 78,2 | 78,3 |
| YI | 40,0 | 35,3 | 28,4 | 51,2 | 47,1 |
| Q | 1,39 | 1,22 | 1,14 | 1,51 | 1,35 |
| löslicher Anteil [%] | 87,1 | 97,2 | 98,1 | 86,2 | 86,5 |
| Mw [g/mol] | 48200 | 44000 | 43100 | 47500 | 47100 |

Die erfindungsgemäßen Beispiele 2 und 3 belegen, dass durch das erfindungsgemäße Verfahren zur Aufarbeitung von Polymerlösungen in Gegenwart eines hydrieraktiven Katalysators und Wasserstoff Polymere (Produkte) erhalten werden, die einen deutlich verbesserten Gelbwert (YI) aufweisen.

Vergleichsbeispiel V4 zeigt eine Aufarbeitung der Polymerlösung gemäß dem Verfahren, welches in Dokument DE 195 01 063 offenbart ist. Vergleichsbeispiel V5 zeigt eine Aufarbeitung gemäß dem Verfahren, wie es in Dokument DE 102 21 177 offenbart ist. Die Beispiele belegen, dass mit dem erfindungsgemäßen Verfahren Polymere erhalten werden, die deutlich verbesserte Gelbwerte (YI) aufweisen.

## Patentansprüche

1. Verfahren zur Aufarbeitung von Polymerlösungen umfassend *N*-Methyl-2-pyrrolidon und ein Polymer wobei die Polymerlösung in Gegenwart eines hydrieraktiven Katalysators mit Wasserstoff hydriert wird, wobei als Polymerlösung eine Polyarylenetherlösung eingesetzt wird.

2. Verfahren nach Anspruch 1, **dadurch gekennzeichnet, dass** als hydrieraktiver Katalysator ein heterogener hydrieraktiver Katalysator verwendet wird, umfassend (i) von 10 bis 99,999 Gew.-% Aluminium- und/oder Zinkoxid und (ii) von 0,001 bis 90 Gew.-% Kobalt, Nickel, Kupfer, Palladium oder deren Mischungen, wobei die Summe der Gew.-% bezogen ist auf die Summe an (i) und (ii) und 100 Gew.-% ergibt.

3. Verfahren nach einem der vorangehenden Ansprüche **dadurch gekennzeichnet, dass** das Verfahren bei einem Druck von 1 bar bis 320 bar durchgeführt wird.

4. Verfahren nach einem der vorangehenden Ansprüche **dadurch gekennzeichnet, dass** das Verfahren bei einer Temperatur von 20 bis 250 °C durchgeführt wird.

5. Verfahren nach einem der vorangehenden Ansprüche **dadurch gekennzeichnet, dass** das Verfahren im Festbett oder in Suspension durchgeführt wird.

6. Produkt erhalten aus dem Verfahren nach einem der Ansprüche 1 bis 5.

7. Verwendung einer Polymerlösung nach einem der Ansprüche 1 bis 5 zur Herstellung von Polymerprodukten.

8. Verfahren zu Herstellung eines Polyarylenethers **dadurch gekennzeichnet, dass**
(A) eine Polymerisationsreaktion zur Herstellung des Polyarylenethers durchgeführt wird
(B) anorganische Bestandteile der Lösung entfernt werden
(C) die Lösung gemäß mindestens einem der Ansprüche 1 bis 5 aufgearbeitet wird
(D) aus der Lösung durch Vereinzelung in ein Fällbad Polyarylenetherperlen hegestellt werden
(E) die Polyarylenetherperlen extrahiert und getrocknet werden.

9. Produkt erhältlich nach Anspruch 8, wobei ein Formkörper hergestellt aus Polyarylenetherperlen einen Yellownessindex gemessen nach DIN 6167 von 10 bis 38 hat.

10. Produkt erhältlich nach Anspruch 8, wobei ein Formkörper hergestellt aus Polyarylenetherperlen nach thermischer Belastung bei 400°C für 1 h einen löslichen Anteil in Dimethylacetamid von 92 bis 99,5 Gew.-% hat wobei die Summe der Gew.-% bezogen ist auf das Gesamtgewicht des Formkörpers nach thermischer Belastung und die Summe 100 Gew.-% ergibt.

## Claims

1. A process for the work-up of polymer solutions comprising *N*-Methyl-2-pyrrolidone and a polymer where the polymer solution is hydrogenated with hydrogen in the presence of a hydrogenation catalyst, where a polyarylene ether solution is used as polymer solution.

2. The process according to claim 1, wherein a heterogeneous hydrogenation catalyst is used as hydrogenation catalyst and comprises (i) from 10 to 99.999% by weight of aluminum oxide and/or of zinc oxide and (ii) from 0.001 to 90% by weight of cobalt, nickel, copper, palladium, or a mixture of these, where the total of the % by weight values is based on the total of (i) and (ii) and is 100% by weight.

3. The process according to either of the preceding claims, which is carried out at a pressure of from 1 bar to 320 bar.

4. The process according to any of the preceding claims, which is carried out at a temperature of from 20 to 250°C.

5. The process according to any of the preceding claims, which is carried out in a fixed bed or in suspension.

6. A product obtained from the process according to any of claims 1 to 5.

7. The use of a polymer solution according to any of claims 1 to 5 for producing polymer products.

8. A process for producing a polyarylene ether, which comprises
(A) carrying out a polymerization reaction to produce the polyarylene ether
(B) removing inorganic constituents of the solution
(C) working the solution up according to at least one of claims 1 to 5
(D) producing polyarylene ether beads from the solution by separation into a precipitation bath, and
(E) extracting and drying the polyarylene ether beads.

9. A product obtainable according to claim 8, where the yellowness index of a molding produced from polyarylene ether beads is from 10 to 38, measured in accordance with DIN 6167.

10. A product obtainable according to claim 8, where the dimethylacetamide-soluble content of a molding produced from polyarylene ether beads, after heat-aging at 400°C for 1 h, is from 92 to 99.5% by weight, where the total of the % by weight values is based on the total weight of the molding after heat-aging and the total is 100% by weight.

## Revendications

1. Procédé pour le traitement de solutions polymères comprenant de la N-méthyl-2-pyrrolidone et un polymère, la solution polymère étant hydrogénée en présence d'un catalyseur actif en hydrogénation, une solution de polyarylène-éther étant utilisée comme solution polymère.

2. Procédé selon la revendication 1, **caractérisé en ce qu'**on utilise, comme catalyseur actif en hydrogénation, un catalyseur actif en hydrogénation hétérogène, comprenant (i) 10 à 99,999% en poids d'oxyde d'aluminium et/ou de zinc et (ii) 0,001 à 90% en poids de cobalt, de nickel, de cuivre, de palladium ou de leurs mélanges, la somme des % en poids se rapportant à la somme de (i) et (ii) et valant 100% en poids.

3. Procédé selon l'une quelconque des revendications précédentes, **caractérisé en ce que** le procédé est réalisé à une pression à 1 jusqu'à 320 bars.

4. Procédé selon l'une quelconque des revendications précédentes, **caractérisé en ce que** le procédé est réalisé à une température de 20 à 250°C.

5. Procédé selon l'une quelconque des revendications précédentes, **caractérisé en ce que** le procédé est réalisé en lit fixe ou en suspension.

6. Produit obtenu selon le procédé selon l'une quelconque des revendications 1 à 5.

7. Utilisation d'une solution polymère selon l'une quelconque des revendications 1 à 5 pour la préparation de produits polymères.

8. Procédé pour la préparation d'un polyarylène-éther, **caractérisé en ce que**
(A) une réaction de polymérisation est réalisée pour la préparation du polyarylène-éther
(B) les constituants inorganiques sont éliminés de la solution
(C) la solution est traitée selon au moins l'une quelconque des revendications 1 à 5,
(D) des billes de polyarylène-éther sont préparées à partir de la solution par individualisation dans un bain de précipitation
(E) les billes de polyarylène-éther sont extraites et séchées.

9. Produit pouvant être obtenu selon la revendication 8, un corps façonné préparé à partir des billes de polyarylène-éther présentant un indice de jaunissement selon la norme DIN 6167 de 10 à 38.

10. Produit pouvant être obtenu selon la revendication 8, un corps façonné préparé à partir des billes de polyarylène-éther présentant, après sollicitation thermique à 400°C pendant 1 h, une proportion soluble dans le diméthylacétamide de 92 à 99,5% en poids, la somme des % en poids se rapportant au poids total du corps façonné après la sollicitation thermique et la somme valant 100% en poids.
